# EUROPEAN PATENT SPECIFICATION

(11) **EP 3 323 865 B1**
(45) Date of publication and mention of the grant of the patent: **02.09.2020**
(21) Application number: 16824497.8
(22) Date of filing: 13.07.2016
(51) Int. Cl.: C09D 183/00, B32B 27/00, C09D 5/16, C09K 3/18, C09D 4/00

(54) **ANTIFOULING COMPOSITION, ANTIFOULING SHEET, AND PROCESS FOR PRODUCING ANTIFOULING SHEET**
BEWUCHSHEMMENDE ZUSAMMENSETZUNG, BEWUCHSHEMMENDE SCHICHT UND VERFAHREN ZUR HERSTELLUNG EINER BEWUCHSHEMMENDEN SCHICHT
COMPOSITION ANTISALISSURE, FEUILLE ANTISALISSURE ET PROCÉDÉ DE PRODUCTION D'UNE FEUILLE ANTISALISSURE

(30) Priority: 16.07.2015 JP 2015142033
(43) Date of publication of application: 23.05.2018
(73) Proprietor: Lintec Corporation, Tokyo 173-0001 (JP)
(72) Inventor: HIRONAGA, Maki, Tokyo 173-0001 (JP); MIYATA, Sou, Tokyo 173-0001 (JP); ONO, Yoshitomo, Tokyo 173-0001 (JP)
(74) Representative: Gille Hrabal
(86) International application number: PCT/JP2016/070700
(87) International publication number: WO 2017/010517

(56) References cited:
- WO-A1-2014/136275
- JP-A- 2008 255 192
- JP-A- 2010 163 584
- JP-A- 2010 163 584
- JP-A- 2010 248 468
- JP-A- 2011 132 486
- US-A1- 2012 312 192

## Description

### Technical Field

The present invention relates to an antifouling composition, an antifouling sheet including an antifouling layer formed of the antifouling composition, and a method for producing the same.

### Background Art

In general, it is desirable that water droplets, scars, stains, and so on that may hinder vision do not adhere to the surfaces of windows for buildings, windows for automobiles, windshields for cars, airplanes, ships, and so on, aquariums, ship bottom windows, undersea lives adhesion preventing films for ship bottoms, road panels, such as soundproof walls, etc., mirrors installed in bathrooms, and so on, and molded articles, such as glass chambers, glass accessories, and etc.

By coating the surfaces of such molded articles with a coating film formed of an antifouling substance, or by sticking an antifouling sheet thereto, the surfaces are given water repellency or antifouling properties.

For example, PTL 1 discloses a water-repellent film-coated article, in which a substrate, such as glass, etc., is coated with a laminate having an underlayer formed of an inorganic compound and a water-repellent film formed of a fluorine-containing compound, which coats the surface of the underlayer. US20120312192 discloses a three-component xerogel composition comprising a long-chain alkyltrialkoxysilane (C₁₀ or more), in combination with a shorter-chain alkyltrialkoxysilane, as well as a tetraalkoxysilane,

### Citation List

### Patent Literature

PTL 1: JP 2010-285574A

### Summary of Invention

### Technical Problem

However, the water-repellent film-coated article described in PTL 1 has a water-repellent film formed of a fluorine-containing compound and is therefore unfavorable from the viewpoint of environmental protection.

In addition, the antifouling sheet is exposed to such risk that the surface of the antifouling layer is scared due to contact with other substance. Even though a minute scar, such as a scratch, etc., is present, not only hindrance of vision is possibly caused, but also there may be a cause of making water droplets adhering to the surface of the antifouling layer slip off hardly. In addition, stains are liable to adhere, and there may be a cause of making the adhered stains hard to drop. As a result, there is encountered such a problem that the antifouling properties of the antifouling layer are worsened. Accordingly, the antifouling layer of imparting water repellency and antifouling properties is required to be an antifouling layer having a higher surface hardness and more excellent friction properties. Furthermore, the antifouling layer is also required that the surface state or curability of the layer is favorable.

An object of the present invention is to provide an antifouling composition which may become a forming material of an antifouling layer having favorable surface state and curability as well as favorable water repellency and water slipping properties and having a high surface hardness and a low coefficient of friction, an antifouling sheet including an antifouling layer formed of the antifouling composition, and a method for producing the same.

### Solution to Problem

The present inventors have found that an antifouling composition including a tetrafunctional silane-based compound having a specified structure, at least two trifunctional silane-based compounds each having a specified structure, and a metal catalyst, the respective components being contained so as to satisfy specified conditions, is able to solve the aforementioned problem, thereby leading to accomplishment of the present invention.

Specifically, the present invention provides the following [1] to [14].
[1] An antifouling composition including the following components (A) to (D) and satisfying the following conditions (I) and (II):
   Component (A): a tetrafunctional silane-based compound represented by the following general formula (a):

      Si(OR¹)ₚ(X¹)₄₋ₚ (a)

      wherein,
      R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
   Component (B): a trifunctional silane-based compound represented by the following general formula (b):

      R²Si(OR³)_{q}(X²)_{3-q} (b)

      wherein,
      R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3,
   Component (C): a trifunctional silane-based compound represented by the following general formula (c):

      R⁴Si(OR⁵)ᵣ(X³)₃₋ᵣ (c)

      wherein,
      R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3,
   Component (D): a metal catalyst,
   Condition (I): a ratio of a molar amount of the component (A) to a molar amount of the component (B) [(A)/(B)] (molar ratio) is 1.4 or more, and
   Condition (II): a ratio of a molar amount of the component (B) to a total molar amount of the component (B) and the component (C) [(B)/{(B) + (C)}] (molar ratio) is 0.020 or more.
[2] The antifouling composition as set forth above in [1], wherein the content of the component (D) is 0.010 mol% or more and 50.000 mol% or less based on 100 mol% of a sum total of the component (A), the component (B), and the component (C).
[3] The antifouling composition as set forth above in [1] or [2], wherein the component (D) is a metal catalyst which does not require light irradiation for revealing a catalytic action.
[4] The antifouling composition as set forth above in any of [1] to [3], wherein the component (D) is at least one selected from the group consisting of a titanium-based catalyst, a zirconium-based catalyst, a palladium-based catalyst, a tin-based catalyst, an aluminum-based catalyst, and a zinc-based catalyst.
[5] The antifouling composition as set forth above in any of [1] to [4], further including an acid catalyst that is a component (E), the content of the component (E) being 0.010 mol% or more and 1.000 mol% or less based on 100 mol% of a sum total of the component (A), the component (B), and the component (C).
[6] The antifouling composition as set forth above in [5], wherein the component (E) is at least one selected from the group consisting of hydrochloric acid, phosphoric acid, acetic acid, formic acid, sulfuric acid, methanesulfonic acid, oxalic acid, p-toluenesulfonic acid, and trifluoroacetic acid.
[7] The antifouling composition as set forth above in [5] or [6], wherein a total content of the component (A), the component (B), the component (C), the component (D), and the component (E) in the antifouling composition is 50% by mass or more and 100% by mass or less based on 100% by mass of the total amount of the antifouling composition.
[8] An antifouling sheet including an antifouling layer formed of the antifouling composition as set forth above in any of [1] to [7].
[9] The antifouling sheet as set forth above in [8], wherein the antifouling layer is included on a substrate.
[10] The antifouling sheet as set forth above in [8], having a configuration in which the antifouling layer is sandwiched between two release materials.
[11] The antifouling sheet as set forth above in any of [8] to [10], further including a pressure sensitive adhesive layer.
[12] The antifouling sheet as set forth above in any of [8] to [11], wherein the thickness of the antifouling layer is 40 µm or less.
[13] A method for producing an antifouling sheet, including the following steps (1) and (2):
   Step (1): a step of preparing an antifouling composition including the following components (A) to (D) and satisfying the following conditions (I) and (II):
      Component (A): a tetrafunctional silane-based compound represented by the following general formula (a):

         Si(OR¹)ₚ(X¹)₄₋ₚ (a)

         wherein,
         R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
      Component (B): a trifunctional silane-based compound represented by the following general formula (b):

         R²Si(OR³)_{q}(X²)_{3-q} (b)

         wherein,
         R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3,
      Component (C): a trifunctional silane-based compound represented by the following general formula (c):

         R⁴Si(OR⁵)ᵣ(X³)₃₋ᵣ (c)

         wherein,
         R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3,
      Component (D): a metal catalyst,
      Condition (I): a ratio of a molar amount of the component (A) to a molar amount of the component (B) [(A)/(B)] (molar ratio) is 1.4 or more, and
      Condition (II): a ratio of a molar amount of the component (B) to a total molar amount of the component (B) and the component (C) [(B)/{(B) + (C)}] (molar ratio) is 0.020 or more, and
   Step (2): a step of coating the antifouling composition on a substrate or a release material, followed by drying to form an antifouling layer.
[14] An antifouling sheet obtained by the production method as set forth above in [13].

### Advantageous Effects of Invention

In accordance with the present invention, it is able to provide an antifouling composition which may become a forming material of an antifouling layer having favorable surface state and curability as well as favorable water repellency and water slipping properties and having a high surface hardness and a low coefficient of friction, an antifouling sheet including an antifouling layer formed of the antifouling composition, and a method for producing the same.

### Brief Description of Drawings

Fig. 1 illustrates cross-sectional views of antifouling sheets each having a substrate, as an embodiment according to the antifouling sheet of the present invention.
Fig. 2 illustrates cross-sectional views of antifouling sheets each not having a substrate, as an embodiment according to the antifouling sheet of the present invention.

### Description of Embodiments

### [Antifouling Composition]

The antifouling composition of the present invention includes a tetrafunctional silane-based compound represented by the general formula (a) as a component (A), a trifunctional silane-based compound represented by the general formula (b) as a component (B), a trifunctional silane-based compound represented by the general formula (c) as a component (C), and a metal catalyst as a component (D) so as to satisfy conditions (I) and (II) as described later.

Preferably, the antifouling composition of the present invention further includes an acid catalyst as a component (E) and may include any other additives than the components (A) to (E) within a range where the advantageous effects of the present invention are not impaired.

The antifouling layer formed of the antifouling composition of the present invention is favorable in surface state and curability and favorable in water repellency and water slipping properties and also has a high surface hardness and a low coefficient of friction.

The antifouling layer is formed in view of the fact that a condensation reaction among the silane-based compounds in the antifouling composition proceeds to form a polymer. The present inventors have paid attention to the matter that with respect to a structure of the polymer obtained through a reaction among the silane-based compounds, by using the component (B) that is the trifunctional silane-based compound having an alkyl group having a relatively larger carbon number, the presence of the alkyl group in the unit derived from the component (B) (R² in the general formula (b)) contributes to an improvement of water repellency.

Meanwhile, the present inventors have conjectured that when the unit derived from the component (B) becomes dense, the reactivity is worsened due to steric hindrance of the bulky alkyl group or the like, whereby there is a tendency that the curability of the antifouling layer is worsened, and the surface hardness is worsened, too. Furthermore, in the case of using only the component (B), the reactivity at the time of curing is worsened. Accordingly, the unreacted alkoxy groups derived from the component (A) and the component (B) (OR¹ in the general formula (a) and OR³ in the general formula (b)) and an uncondensed silanol group resulting from hydrolysis of the aforementioned alkoxy groups (hereinafter, the both will be also combined and referred to simply as "uncondensed site") are liable to exist in the antifouling layer immediately after the formation. The uncondensed site gradually reacts due to long-term outdoor exposure or the like, resulting in cure shrinkage, and a strain is generated in the antifouling layer. As a result, generation and progress of a crack are promoted, so that there is a concern that weathering resistance of the antifouling layer is worsened.

Then, the present inventors have paid attention to the matter that by jointly using the component (C) that is the trifunctional silane-based compound having an alkyl group having a smaller carbon number and different from the component (B) and increasing a proportion of the alkyl group occupying in the unit derived from the component (C) (R⁴ in the general formula (c)), the curability of the antifouling layer is improved, whereby the surface hardness is improved.

But, on the other hand, in view of the fact that the unit derived from the component (B), which may be considered to contribute to an improvement of the water repellency, becomes sparse, it was considered that the water repellency is worsened. Furthermore, a defect that in the case of using only the component (C), the coefficient of friction increases, so that the friction properties are inferior has been confirmed by the present inventors.

Similarly, the present inventors have also paid attention to introduction of the unit derived from the component (A) that is the tetrafunctional silane-based compound taking on the responsibility of acting as a spacer between the units derived from the component (B).

But, even in this case, it was conjectured that when the unit derived from the component (A) increases, the unit derived from the component (B) that may be considered to contribute to an improvement of the water repellency becomes sparse. Furthermore, it was conjectured that there is a tendency that the hydroxyl group existing on the surface of the antifouling layer increases, whereby the water repellency of the antifouling layer is also greatly worsened.

In consequence, even when the components (A) to (C) are merely blended, in general, any of the surface hardness, the water repellency, or the friction properties is sacrificed, and in particular, it may be considered that the surface hardness and the water repellency are in a trade-off relationship.

However, astonishingly, the present inventors have found that when the following requirements are satisfied, an antifouling layer capable of making both favorable water repellency and excellent surface hardness compatible with each other and further revealing favorable friction properties may be formed.

That is, with respect to the alkyl group in the unit derived from the component (B) (R² in the general formula (b)) and the alkyl group in the unit derived from the component (C) (R⁴ in the general formula (c)), the specified carbon number has been selected, respectively.

Then, the component (A) has been introduced so as to satisfy the specified condition (I) as described later, and the component (B) and the component (C) have been used jointly so as to satisfy the specified condition (II) as described later.

Furthermore, by using the metal catalyst as the component (D), the condensation reaction of the component (A), the component (B), and the component (C) has been allowed to proceed effectively.

As a result, the present inventors have found that the antifouling layer capable of revealing the aforementioned respective properties may be formed, thereby leading to accomplishment of the present invention.

Each of the components which are included in the antifouling composition of the present invention is hereunder described.

### <Component (A): Tetrafunctional Silane-based Compound represented by General Formula (a)>

The antifouling composition of the present invention includes a tetrafunctional silane-based compound represented by the following general formula (a) as the component (A):

Si(OR¹)ₚ(X¹)₄₋ₚ (a)

wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4.

Examples of the alkyl group which may be selected as R¹ include a methyl group, an ethyl group, a n-propyl group, an isopropyl group, a n-butyl group, a s-butyl group, an isobutyl group, a t-butyl group, a n-pentyl group, a n-hexyl group, a neopentyl group, a methylpentyl group, and the like. Among them, from the viewpoint of obtaining more favorable curability, a methyl group, an ethyl group, or a n-propyl group is preferred, and a methyl group or an ethyl group is more preferred.

Although the alkyl group which may be selected as R¹ may be either linear or branched, it is preferably linear.

As the halogen atom which may be selected as X¹, a chlorine atom, a bromine atom, or an iodine atom is preferred, and a chlorine atom is more preferred.

The silane-based compound represented by the general formula (a) may be used either alone or in combination of two or more thereof.

Preferably, the component (A) includes a silane-based compound represented by the general formula (a) wherein p is 4.

From the viewpoint of improving the curability of the antifouling layer formed of the antifouling composition, the viewpoint of obtaining a favorable surface state, and the viewpoint of obtaining a high surface hardness, the content of the component (A) in the antifouling composition is preferably 45.00 mol% or more, more preferably 55.00 mol% or more, still more preferably 65.00 mol% or more, and yet still more preferably 75.00 mol% or more, and preferably 98.00 mol% or less, and more preferably 96.00 mol% or less based on 100 mol% of a sum total of the component (A), the component (B), and the compound (C). The foregoing content may also be calculated from the blending amount at the time of blending each of the components.

### <Component (B): Trifunctional Silane-based Compound represented by General Formula (b)>

The antifouling composition of the present invention includes a trifunctional silane-based compound represented by the following general formula (b) as the component (B) together with the aforementioned component (A):

R²Si(OR³)_{q}(X²)_{3-q} (b)

wherein,
R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3.

The carbon number of the alkyl group which may be selected as R² is 6 to 14.

When the carbon number of the alkyl group is less than 6, there is a tendency that a water slip angle increases, whereby the water repellency is worsened. From such a viewpoint, the carbon number of the alkyl group is preferably 7 or more, more preferably 8 or more, and still more preferably 9 or more.

When the carbon number of the alkyl group is more than 14, the curability of the antifouling layer formed of the antifouling composition is inferior. In addition, as the carbon number of the alkyl group increases, the resulting antifouling composition is liable to be gelled, and the surface state of the antifouling layer formed of the antifouling composition also tends to be deteriorated. From such a viewpoint, the carbon number of the alkyl group is preferably 13 or less, more preferably 12 or less, and still more preferably 11 or less.

Examples of the alkyl group which may be selected as R² include a n-hexyl group, a n-heptyl group, a n-octyl group, a n-nonyl group, a n-decyl group, a n-undecyl group, a n-dodecyl group, a n-tridecyl group, a n-tetradecyl group, a methylpentyl group, a heptylhexyl group, a butylpentyl group, a 2-ethylhexyl group, and the like.

Although the alkyl group which may be selected as R² may be either linear or branched, it is preferably linear from the viewpoint of improving the curability and the surface state of the antifouling layer formed of the antifouling composition. From the viewpoint of improving the curability and the surface state of the antifouling layer, a n-hexyl group, a n-decyl group, a n-dodecyl group, or the like is preferred; from the viewpoint of obtaining more favorable water repellency, a n-decyl group or a n-dodecyl group is preferred; and from the viewpoint of making the curability and the surface state as well as the surface hardness and the water repellency of the antifouling layer compatible with each other with a favorable balance, a n-decyl group is more preferred.

As the alkyl group which may be selected as R³ and the halogen atom which may be selected as X², the same alkyl groups which may be selected as R¹ and halogen atoms which may be selected as X¹ in the general formula (a) are exemplified.

The trifunctional silane-based compound represented by the general formula (b) may be used either alone or in combination of two or more thereof.

Preferably, the component (B) includes a trifunctional silane-based compound represented by the general formula (b) wherein q is 3.

The content of the component (B) in the antifouling composition is preferably 0.30 mol% or more, more preferably 0.40 mol% or more, still more preferably 0.50 mol% or more, and yet still more preferably 0.80 mol% or more based on 100 mol% of a sum total of the component (A), the component (B), and the compound (C). In addition, from the viewpoint of making the surface state of the antifouling layer formed of the antifouling composition favorable, the viewpoint of improving the curability, and the viewpoint of obtaining a high surface hardness, the content of the component (B) is preferably 36.00 mol% or less, more preferably 33.00 mol% or less, still more preferably 26.00 mol% or less, yet still more preferably 24.00 mol% or less, and even yet still more preferably 19.00 mol% or less. The foregoing content may also be calculated from the blending amount at the time of blending each of the components.

### (Re: Condition (I))

The antifouling composition of the present invention is an antifouling composition satisfying the following condition (I) in a relationship between the aforementioned component (A) and component (B).

Condition (I): a ratio of a molar amount of the component (A) to a molar amount of the component (B) [(A)/(B)] (molar ratio) is 1.4 or more

When the foregoing [(A)/(B)] (molar ratio) is less than 1.4, the curability and the surface hardness of the antifouling layer formed of the antifouling composition are inferior. From such a viewpoint, the foregoing [(A)/(B)] (molar ratio) is preferably 1.5 or more, more preferably 1.9 or more, still more preferably 2.1 or more, yet still more preferably 2.5 or more, and even yet still more preferably 5.0 or more.

Preferably, the foregoing [(A)/(B)] (molar ratio) is 300.0 or less. When the foregoing [(A)/(B)] (molar ratio) is 300.0 or less, the antifouling layer formed of the antifouling composition has more favorable water repellency without causing an extreme decrease of an existence ratio of the alkyl group represented by R² in the component (B). From such a viewpoint, the foregoing [(A)/(B)] (molar ratio) is more preferably 200.0 or less, still more preferably 150.0 or less, yet still more preferably 100.0 or less, and even yet still more preferably 90.0 or less.

### <Component (C): Trifunctional Silane-based Compound represented by General Formula (c)>

The antifouling composition of the present invention includes a trifunctional silane-based compound represented by the following general formula (c) as the component (C) together with the aforementioned component (A) and component (B):

R⁴Si(OR⁵)ᵣ(X³)₃₋ᵣ (c)

wherein,
R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3.

The carbon number of the alkyl group which may be selected as R⁴ is 1 to 3. When the carbon number of the alkyl group is more than 3, the curability of the antifouling layer formed of the antifouling composition is inferior, and the surface hardness is liable to be also worsened.

As the alkyl group which may be selected as R⁴, a methyl group, an ethyl group, a n-propyl group, or an isopropyl group is exemplified; from the viewpoint of obtaining more favorable water slipping properties, a methyl group or an ethyl group is preferred; and from the viewpoint of obtaining a higher surface hardness and a low coefficient of friction, a methyl group is more preferred.

As the alkyl group which may be selected as R⁵ and the halogen atom which may be selected as X³, the same alkyl groups which may be selected as R¹ and halogen atoms which may be selected as X¹ in the general formula (a) are exemplified.

The trifunctional silane-based compound represented by the general formula (c) may be used either alone or in combination of two or more thereof.

Preferably, the component (C) includes a trifunctional silane-based compound represented by the general formula (c) wherein r is 3.

From the viewpoint of improving the curability of the antifouling layer formed of the antifouling composition, the viewpoint of obtaining a favorable surface state, and the viewpoint of obtaining a high surface hardness, the content of the component (C) in the antifouling composition is preferably 0.50 mol% or more, more preferably 0.80 mol% or more, still more preferably 1.00 mol% or more, and yet still more preferably 1.30 mol% or more, and preferably 40.00 mol% or less, and more preferably 38.00 mol% or less based on 100 mol% of a sum total of the component (A), the component (B), and the component (C). The foregoing content may also be calculated from the blending amount at the time of blending each of the components.

In the antifouling composition of the present invention, as for a relationship between the aforementioned component (A) and component (C), a ratio of a molar amount of the component (A) to a molar amount of the component (C) [(A)/(C)] (molar ratio) is not particularly limited, and it is preferably 1.0 or more. In addition, the foregoing [(A)/(C)] (molar ratio) is preferably 70.0 or less.

### (Re: Condition (II))

The antifouling composition of the present invention is an antifouling composition satisfying the following condition (II) in a relationship between the aforementioned component (B) and component (C).

Condition (II): a ratio of a molar amount of the component (B) to a total molar amount of the component (B) and the component (C) [(B)/{(B) + (C)}] (molar ratio) is 0.020 or more.

When the foregoing [(B)/{(B) + (C)}] (molar ratio) is less than 0.020, a coefficient of static friction and a coefficient of dynamic friction of the antifouling layer formed of the antifouling composition become high, so that the friction properties are inferior. In addition, in view of the fact that the existence ratio of the alkyl group represented by R² in the component (B) extremely decreases, a water contact angle of the antifouling layer formed of the antifouling composition decreases, so that the water repellency is inferior. From such a viewpoint, the foregoing [(B)/{(B) + (C)}] (molar ratio) is preferably 0.025 or more, more preferably 0.035 or more, still more preferably 0.045 or more, and yet still more preferably 0.050 or more.

An upper limit of the foregoing [(B)/{(B) + (C)}] (molar ratio) is not particularly limited, and the foregoing [(B)/{(B) + (C)}] (molar ratio) is preferably 0.995 or less, more preferably 0.990 or less, still more preferably 0.980 or less, and yet still more preferably 0.950 or less.

When the antifouling composition of the present invention includes the component (B) and the component (C) as the trifunctional silane-based compounds so as to satisfy the aforementioned condition (I) and condition (II), the high surface hardness and the low coefficient of friction of the antifouling layer formed of the antifouling composition may be made compatible with each other. In addition, when the component (C) is included, an improvement in the weathering resistance of the antifouling layer formed of the antifouling composition may be expected.

In the antifouling composition of the present invention, as for a relationship among the component (A), the component (B), and the component (C), a ratio of a molar amount of the component (A) to a total molar amount of the component (B) and the component (C) [(A)/{(B) + (C)}] (molar ratio) is preferably 0.50 or more, and more preferably 0.90 or more. In addition, the foregoing [(A)/{(B) + (C)}] (molar ratio) is preferably 25.00 or less, and more preferably 20.00 or less.

### <(D) Component: Metal Catalyst>

The antifouling composition of the present invention further includes a metal catalyst as the component (D) together with the components (A) to (C). In the case where the metal catalyst is not included, the condensation reaction among the component (A), the component (B), and the component (C) may not be efficiently promoted, and the curability of the antifouling layer formed of the antifouling composition may not be thoroughly improved.

In the case of the antifouling composition not including the component (D), a curing reaction may not be allowed to proceed at a relatively low temperature (130°C or lower). Accordingly, for example, in the case where it is desired to form the antifouling layer formed of the antifouling composition on a substrate with low heat resistance, such as a vinyl chloride resin, etc., if it is intended to form the antifouling layer at a low temperature at which heat shrinkage of the substrate may be suppressed, there is a concern that the curability of the antifouling layer becomes insufficient. Conversely, in order to allow the curing reaction to proceed thoroughly, in the case where it is intended to cure the antifouling layer at a relatively high temperature (higher than 130°C), there is a concern that heat shrinkage of the substrate is generated.

Preferably, the metal catalyst is a metal catalyst which does not require light irradiation for revealing a catalytic action.

In the present specification, the "metal catalyst which does not require light irradiation for revealing a catalytic action" indicates a metal catalyst which does not require light irradiation for revealing a catalytic action relative to the condensation reaction among the aforementioned component (A), component (B), and component (C). Metal catalysts generally called photocatalysts, for example, titanium oxide (TiO₂), zinc oxide (ZnO), etc., which require light irradiation for revealing a catalytic action, such as occurrence of oxidation reaction and reduction reaction due to production of an electron and a hole upon light irradiation, are excluded.

In the case where the antifouling layer contains the aforementioned "metal catalyst which does not require light irradiation for revealing a catalytic action", a fault that may be possibly generated in the case of using a photocatalyst may be avoided. As the fault that may be possibly generated in the case of using a photocatalyst, there are exemplified problems, such as, lowering of water repellency to be caused due to the matter that since the photocatalyst itself is a solid, the surface roughness of the antifouling layer becomes large; lowering of water repellency to be caused due to a hydrophilicity giving effect of the photocatalyst; and lowering of durability of the antifouling layer to be caused due to promotion of hydrolysis of a polymer of a silane compound.

Preferably, the metal catalyst is at least one selected from the group consisting of a titanium-based catalyst, a zirconium-based catalyst, a palladium-based catalyst, a tin-based catalyst, an aluminum-based catalyst, and a zinc-based catalyst.

Preferably, the aforementioned titanium-based catalyst is a compound other than a photocatalyst containing a titanium atom, and examples thereof include a titanium alkoxide, a titanium chelate, a titanium acylate, and the like. The titanium-based catalyst may also be a hydroxide, an acetate, a carbonate, a sulfate, a nitrate, a chloride, or the like of titanium.

Examples of the titanium alkoxide include titanium tetraisopropoxide, titanium tetra-n-butoxide, a titanium butoxide dimer, titanium tetra-2-ethylhexoxide, and the like.

Examples of the titanium chelate include a titanium acetylacetonate, such as titanium diisopropoxy bis(acetylacetonate), titanium tetracetylacetonate, etc.; a titanium ethylacetoacetate, such as titanium diisopropoxy bis(ethylacetoacetate), etc.; a titanium triethanol aminate, such as titanium diisopropoxy bis(triethanolaminate), etc.; a titanium octylene glyconate, such as titanium tetraoctylene glyconate, titanium dioctyloxy bis(octylene glyconate), titanium di-2-ethylhexoxy bis(2-ethyl-3-hydroxyhexoxide), etc.; titanium lactate, a titanium lactate ammonium salt, and the like.

Examples of the titanium acylate include polyhydroxytitanium stearate and the like.

Preferably, the aforementioned zirconium-based catalyst is a compound other than a photocatalyst containing a zirconium atom, and examples thereof include a zirconium alkoxide, a zirconium chelate, a zirconium acylate, and the like. The zirconium-based catalyst may also be a hydroxide, an acetate, a carbonate, a sulfate, a nitrate, a chloride, or the like of zirconium.

Examples of the zirconium alkoxide include zirconium tetra-n-propoxide, zirconium tetra-n-butoxide, and the like.

Examples of the zirconium chelate include a zirconium acetyl acetonate, such as zirconium tributoxymonoacetylacetonate, zirconium tetraacetylacetonate, etc.; a zirconium ethylacetonate, such as zirconium dibutoxy bis(ethylacetoacetate), etc.; a zirconium chloride compound, a zirconium lactate ammonium salt, and the like.

Examples of the zirconium acylate include a zirconium octoate compound, zirconium stearate, and the like.

Preferably, the aforementioned palladium-based catalyst is a compound other than a photocatalyst containing a palladium atom, and examples thereof include palladium, palladium chloride, palladium hydroxide, a palladium-on-carbon catalyst (Pd/C), and the like.

Preferably, the aforementioned tin-based catalyst is a compound other than a photocatalyst containing a tin atom, and examples thereof include organic tin compounds, such as stannous octoate, dibutyltin diacetate, dibutyltin dilaurate, dibutyltin mercaptide, dibutyltin dithiocarboxylate, dibutyltin dimaleate, dibutyltin mercaptide, dibutyltin thiocarboxylate, etc or inorganic tin compounds.

Preferably, the aforementioned aluminum-based catalyst is a compound other than a photocatalyst containing an aluminum atom, and examples thereof include an acetoacetate complex of aluminum, an acetylacetonate complex of aluminum, and the like.

Examples of the acetoacetate complex of aluminum include diisopropoxyaluminum monooleylacetoacetate, monoisopropoxyaluminum bisoleylacetoacetate, monoisopropoxyaluminum monooleate monoethylacetoacetate, diisopropoxyaluminum monolaurylacetoacetate, diisopropoxyaluminum monostearylacetoacetate, diisopropoxyaluminum monoisostearylacetoacetate, monoisopropoxyaluminum mono-N-lauroyl-β-alanate monolaurylacetoacetate, aluminum trisacetylacetonate, and the like.

Examples of the acetylacetonate complex of aluminum include a monoacetylacetonatoaluminum bis(isobutylacetoacetate) chelate, a monoacetylacetonatoaluminum bis(2-ethylhexylacetoacetate) chelate, a monoacetylacetonatoaluminum bis(dodecylacetoacetate) chelate, a monoacetylacetonatoaluminum bis(oleylacetoacetate) chelate, and the like.

Preferably, the zinc-based catalyst is a compound other than a photocatalyst containing a zinc atom, and examples thereof include a zinc-chromium oxide, a zinc-aluminum oxide, a zinc-aluminum-chromium oxide, a zinc-chromium-manganese oxide, a zinc-iron oxide, a zinc-iron-aluminum oxide, and the like.

The aforementioned metal catalyst may be used either alone or in combination of two or more thereof.

From the viewpoint of allowing the condensation reaction among the silane-based compounds to proceed effectively and improving the curability of the antifouling layer formed of the antifouling composition and the viewpoint of providing an antifouling composition capable of allowing the curing reaction to proceed even at a relatively low temperature (130°C or lower), it is preferred to contain at least the aforementioned titanium-based catalyst.

The titanium-based catalyst is preferably a titanium chelate; more preferably a titanium ethylacetoacetate, a titanium acetylacetonate, or a titanium octylene glyconate; still more preferably a titanium ethylacetoacetate; and yet still more preferably titanium diisopropoxy bis(ethylacetoacetate).

From the viewpoint of improving the curability of the antifouling layer formed of the antifouling composition and the viewpoint of providing an antifouling composition capable of allowing the curing reaction to proceed even at a relatively low temperature (130°C or lower), the content of the component (D) in the antifouling composition is preferably 0.010 mol% or more, more preferably 0.100 mol% or more, still more preferably 0.150 mol% or more, yet still more preferably 0.300 mol% or more, even yet still more preferably 0.500 mol% or more, and even still more preferably 1.000 mol% or more based on 100 mol% of a sum total of the component (A), the component (B), and the component (C). The foregoing content is preferably 50.000 mol% or less, more preferably 30.000 mol% or less, still more preferably 20.000 mol% or less, yet still more preferably 10.000 mol% or less, even yet still more preferably 6.000 mol% or less, and even still more preferably 3.000 mol% or less.

The foregoing content may also be calculated from the blending amount at the time of blending each of the components.

### <(E) Component: Acid Catalyst)

From the viewpoint of more improving the curability of the antifouling layer formed of the antifouling composition, it is preferred that the antifouling composition of the present invention further includes an acid catalyst as the component (E).

When the acid catalyst is contained in the antifouling composition, the hydrolysis of the reactive functional groups which the component (A), the component (B), and the component (C) have is promoted. As a result, the polycondensation reaction among the silane-based compounds is more promoted, thereby enabling one to form the antifouling layer with excellent curability.

The aforementioned acid catalyst is not particularly limited so long as it is a component having an action to promote the hydrolysis of the reactive functional groups of the component (A), the component (B), and the component (C). For example, from the viewpoint of more improving the curability of the antifouling layer formed of the antifouling composition, it is preferred to include at least one selected from the group consisting of hydrochloric acid, phosphoric acid, acetic acid, formic acid, sulfuric acid, methanesulfonic acid, oxalic acid, p-toluenesulfonic acid, and trifluoroacetic acid, and it is more preferred to include hydrochloric acid.

The aforementioned acid catalyst may be used either alone or in combination of two or more thereof.

From the viewpoint of more improving the curability of the antifouling layer formed of the antifouling composition, the content of the component (E) in the antifouling composition is preferably 0.010 mol% or more, more preferably 0.030 mol% or more, still more preferably 0.050 mol% or more, and yet still more preferably 0.060 mol% or more based on 100 mol% of a sum total of the component (A), the component (B), and the component (C). The foregoing content is preferably 1.000 mol% or less, more preferably 0.500 mol% or less, still more preferably 0.100 mol% or less, and yet still more preferably 0.075 mol% or less. The foregoing content may also be calculated from the blending amount at the time of blending each of the components.

### <Other Additives>

The antifouling composition may further include any other additive than the aforementioned components (A) to (E) within a range where the advantageous effects of the present invention are not impaired.

Examples of other additives include a resin component, a curing agent, an antioxidant, a light stabilizer, a flame retardant, an electroconductive agent, an antistatic agent, a plasticizer, and the like.

The content of each of these additives is preferably 0 to 20% by mass, more preferably 0 to 10% by mass, still more preferably 0 to 5% by mass, and yet still more preferably 0 to 2% by mass relative to the total amount of the antifouling composition.

The total content of the component (A), the component (B), the component (C), and the component (D) in the antifouling composition is preferably 50% by mass or more, more preferably 65% by mass or more, still more preferably 80% by mass or more, yet still more preferably 90% by mass or more, even yet still more preferably 95% by mass or more, and even still more preferably 99% by mass or more, and preferably 100% by mass or less relative to the total amount (100% by mass of the solids content) of the antifouling composition. The foregoing content may also be calculated from the blending amount at the time of blending each of the components.

The total content of the component (A), the component (B), the component (C), the component (D), and the component (E) in the antifouling composition is preferably 50% by mass or more, more preferably 65% by mass or more, still more preferably 80% by mass or more, yet still more preferably 90% by mass or more, even yet still more preferably 95% by mass or more, and even still more preferably 99% by mass or more, and preferably 100% by mass or less relative to the total amount (100% by mass of the solids content) of the antifouling composition. In addition, the foregoing content is more preferably 100% by mass. The foregoing content may also be calculated from the blending amount at the time of blending each of the components.

### <Body to be coated of Antifouling Composition>

An object material coated with the antifouling composition of the present invention is not particularly limited so long as it is a material requiring antifouling properties. The antifouling composition of the present invention may be suitably used for a glass, a metal, an alloy, a semiconductor, a rubber, a cloth, a plastic, a ceramic, a wood, a paper, a fiber, or the like, and may be more suitably used for a glass or a metal. In addition, the antifouling composition of the present invention may also be suitably used for a metal oxide film or a resin-coated surface.

In the case of coating a body to be coated with the antifouling composition, it is preferred that the antifouling composition is dissolved in an organic solvent and applied in a form of solution by a known coating method.

Examples of the organic solvent include methanol, ethanol, propanol, butanol, isopropyl alcohol, methyl ethyl ketone, methyl isobutyl ketone, cyclohexanone, ethyl acetate, butyl acetate, toluene, mineral spirit, and the like.

Though the method for coating the body to be coated with the aforementioned antifouling composition is not particularly limited, examples thereof include a spin coating method, a spray coating method, a bar coating method, a knife coating method, a roll knife coating method, a roll coating method, a blade coating method, a die coating method, a gravure coating method, and the like.

### [Antifouling Sheet]

The antifouling sheet of the present invention is not particularly limited so long as it is a sheet having an antifouling layer formed of the aforementioned antifouling composition of the present invention.

### <Configuration of Antifouling Sheet>

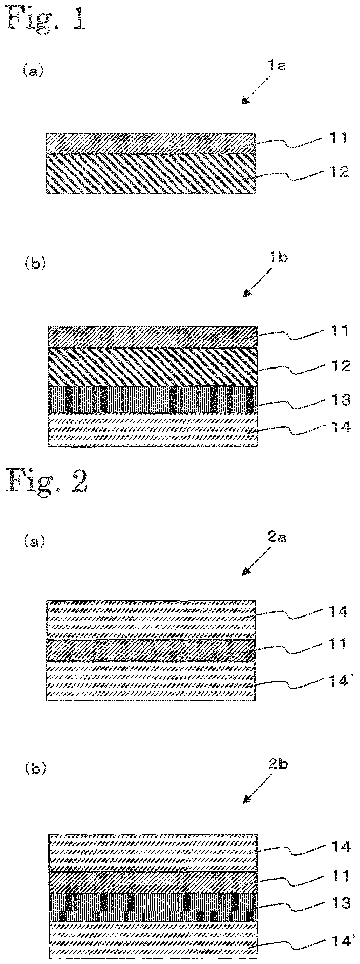

Fig. 1 illustrates cross-sectional views of antifouling sheets each having a substrate, as an embodiment according to the antifouling sheet of the present invention.

As the antifouling sheet having a substrate, there is exemplified an antifouling sheet 1a having an antifouling layer 11 on a substrate 12 as shown in (a) of Fig. 1.

The antifouling sheet may also be an antifouling sheet 1b in which a pressure sensitive adhesive layer 13 and a release material 14 are further provided on the surface opposite to that having the antifouling layer 11 of the substrate 12 as shown in (b) of Fig. 1.

In order to protect the antifouling layer 11 at the time of storage, a release material may be further provided on the antifouling layer 11 of this antifouling sheet 1a or 1b.

Fig. 2 illustrates cross-sectional views of antifouling sheets each not having a substrate, as an embodiment according to the antifouling sheet of the present invention.

As the antifouling sheet not having a substrate, there is exemplified an antifouling sheet 2a having a configuration in which the antifouling layer 11 is sandwiched between two release materials 14 and 14' as shown in (a) of Fig. 2.

The antifouling sheet may also be an antifouling sheet 2b in which in the configuration as shown in (a) of Fig. 2, the pressure sensitive adhesive layer 13 is further provided between the antifouling layer 11 and the release material 14' as shown in (b) of Fig. 2.

### <Antifouling Layer>

The antifouling layer which the antifouling sheet of the present invention has is formed of the aforementioned antifouling composition of the present invention.

The thickness of the antifouling layer is preferably 0.001 µm or more, more preferably 0.005 µm or more, still more preferably 0.01 µm or more, yet still more preferably 0.05 µm or more, and even yet still more preferably 0.10 µm or more. In addition, the foregoing thickness is preferably 40 µm or less, more preferably 25 µm or less, still more preferably 15 µm or less, yet still more preferably 5.0 µm or less, even yet still more preferably 1.0 µm or less, and even still more preferably 0.80 µm or less.

A surface hardness of the aforementioned antifouling layer is preferably 0.8 GPa or more, more preferably 1.0 GPa or more, still more preferably 1.3 GPa or more, yet still more preferably 1.5 GPa or more, even yet still more preferably 2.0 GPa or more, even still more preferably 2.5 GPa or more, and even still more further preferably 2.8 GPa or more. In addition, the surface hardness is preferably 40 GPa or less, and more preferably 30 GPa or less.

A water contact angle of the aforementioned antifouling layer is preferably 70° or more, more preferably 80° or more, still more preferably 95° or more, and yet still more preferably 100° or more. In addition, the water contact angle is preferably 179° or less, more preferably 170° or less, and still more preferably 160° or less.

A water slip angle of the aforementioned antifouling layer is preferably 25° or less, and more preferably 20° or less. In addition, the water slip angle is preferably 0.001° or more, and more preferably 0.002° or more.

A coefficient of static friction of the aforementioned antifouling layer is preferably 0.33 or less, more preferably 0.30 or less, still more preferably 0.25 or less, and yet still more preferably 0.20 or less. In addition, the coefficient of static friction is preferably 0.01 or more, and more preferably 0.05 or more.

A coefficient of dynamic friction of the aforementioned antifouling layer is preferably 0.34 or less, more preferably 0.32 or less, still more preferably 0.26 or less, and yet still more preferably 0.23 or less. In addition, the coefficient of dynamic friction is preferably 0.01 or more, and more preferably 0.05 or more.

Each of the aforementioned thickness, surface hardness, water contact angle, water slip angle, coefficient of static friction, and coefficient of dynamic friction may be measured by the method described in the Examples as described later.

### <Substrate>

Examples of the substrate which is used for an embodiment of the antifouling sheet of the present invention include a paper substrate, a resin film, a resin sheet, a substrate prepared by laminating a paper substrate with a resin, a glass sheet, a metal foil, a metal sheet, and the like, and may be suitably selected in accordance with an application of the antifouling sheet.

Examples of the paper that constitutes a paper substrate include a thin paper, a wood containing paper, a wood-free paper, an impregnated paper, a coated paper, an art paper, a vegetable parchment, a glassine paper, and the like.

Examples of the resin that constitutes a resin film or a resin sheet include polyolefin-based resins, such as polyethylene, polypropylene, etc.; vinyl-based resins, such as polyvinyl chloride, polyvinylidene chloride, polyvinyl alcohol, an ethylene-vinyl acetate copolymer, an ethylene-vinyl alcohol copolymer, an ethylene-methacrylic acid copolymer, etc.; polyester-based resins, such as polyethylene terephthalate, polybutylene terephthalate, polyethylene naphthalate, etc.; polystyrene; an acrylonitrile-butadiene-styrene copolymer; cellulose triacetate; a polycarbonate; urethane-based resins, such as a polyurethane, an acryl-modified polyurethane, etc.; and the like.

Examples of the substrate prepared by laminating a paper substrate with a resin include laminate papers prepared by laminating the aforementioned paper substrate with a thermoplastic resin, such as polyethylene, etc.; and the like.

Among these substrates, a resin film or a resin sheet is preferred, a resin film or a resin sheet formed of a polyester-based resin is more preferred, and a resin film or a resin sheet formed of polyethylene terephthalate (PET) is still more preferred.

Though the metal foil or metal sheet is not particularly limited, examples thereof include metal foils or metal sheets composed of various metals, such as aluminum, nickel, stainless steel, copper, titanium, tungsten, etc.

As the substrate which is used for an embodiment of the antifouling sheet of the present invention, a primer layer-provided substrate in which a primer layer is provided on the surface of the aforementioned substrate may also be used from the viewpoint of improving the adhesiveness thereof to the antifouling layer or a weather-resistant layer as described later.

Examples of the component that constitutes the primer layer include a polyester-based resin, a urethane-based resin, a polyester urethane-based resin, an acrylic resin, and the like. These resins may be used either alone or in combination of two or more thereof.

As the substrate which is used for an embodiment of the antifouling sheet of the present invention, a weather-resistant layer-provided substrate in which a weather-resistant layer composed of a polymeric UV ray absorbent is further provided on the surface of the aforementioned substrate or the surface of the primer layer-provided substrate (a primer layer may be provided between the weather-resistant layer and the substrate) may also be used. The polymeric UV ray absorbent is one having a structure in which ultraviolet absorbing skeletons are covalent-bonded within the polymer structure, and its weight average molecular weight is preferably 5,000 or more, and more preferably 10,000 or more.

In the case where the substrate which is used for an embodiment of the antifouling sheet of the present invention is a resin film or a resin sheet, the surface of such a resin film or resin sheet may be subjected to a surface treatment, such as an oxidation method, a roughening method, etc., as the need arises, from the viewpoint of improving the adhesiveness thereof to the antifouling layer.

The oxidation method is not particularly limited, and examples thereof include a corona discharge treatment method, a plasma treatment method, chromic acid oxidation (wet), a flame treatment, a hot blast treatment, an ozone-UV ray irradiation treatment, and the like.

The roughening method is not particularly limited, and examples thereof include a sand blast method, a solvent treatment method, and the like.

Though such a surface treatment is suitably selected according to the kind of the substrate, a corona discharge treatment method is preferred from the viewpoint of improving the adhesiveness to the antifouling layer as well as the viewpoint of operability.

A metal vapor deposited film or a metal vapor deposited sheet in which a metal is vapor deposited on the surface of each of the aforementioned substrates may also be used. Though the metal is not particularly limited, and examples thereof include various metals, such as aluminum, nickel, iron, copper, gold, silver, chromium, etc., and carbides, oxides, or nitrides thereof, and the like.

Though the thickness of the substrate is suitably selected according to an application of the antifouling sheet, it is preferably 10 to 250 µm, more preferably 15 to 200 µm, and still more preferably 20 to 150 µm from the viewpoints of handleability and economic efficiency.

The substrate which is used in the present invention may further contain a UV ray absorbent other than the aforementioned polymeric UV ray absorbent, a light stabilizer, an antioxidant, an antistatic agent, a slip agent, an antiblocking agent, a colorant, or the like.

### <Release Material>

As the release material which is used for an embodiment of the antifouling sheet of the present invention, a release sheet prepared through a double-side release treatment, a release sheet prepared through a single-side release treatment, and the like are usable, and examples thereof include one prepared by coating a substrate for release material with a release agent and the like.

Examples of the substrate for release material include the paper substrate, the resin film, the resin sheet, the substrate prepared by laminating a paper substrate with a resin, each being usable as the substrate which an embodiment of the antifouling sheet of the present invention has, and the like.

Examples of the release agent include a silicone-based resin, an olefin-based resin, an isoprene-based resin, a rubber-based elastomer, such as a butadiene-based resin, etc., a long-chain alkyl-based resin, an alkyd-based resin, a fluorine-based resin, and the like.

Though the thickness of the release material is not particularly limited, it is preferably 10 to 200 µm, and more preferably 25 to 150 µm.

In the case of having a configuration in which the antifouling layer is sandwiched between two release materials, the two release materials may be the same as or different from each other.

### <Pressure Sensitive Adhesive Layer>

In the case where the antifouling sheet of the present invention has a pressure sensitive adhesive layer, a pressure sensitive adhesive that constitutes the pressure sensitive adhesive layer may be suitably selected according to an application of the antifouling sheet.

Specifically, examples of the pressure sensitive adhesive include an acrylic pressure sensitive adhesive, a urethane-based pressure sensitive adhesive, a silicone-based pressure sensitive adhesive, a rubber-based pressure sensitive adhesive, a polyester-based pressure sensitive adhesive, a UV ray-curable type pressure sensitive adhesive that is cured with energy rays, such as UV rays, etc., and the like.

These pressure sensitive adhesives may be used either alone or in combination of two or more thereof.

Though the thickness of the pressure sensitive adhesive layer is not particularly limited, it is preferably 1 to 100 µm, and more preferably 5 to 80 µm.

### [Production Method of Antifouling Sheet]

The method for producing an antifouling sheet of the present invention includes the following steps (1) and (2):
Step (1): a step of preparing an antifouling composition including the following components (A) to (D) and satisfying the following conditions (I) and (II):
   Component (A): a tetrafunctional silane-based compound represented by the following general formula (a):

      Si(OR¹)ₚ(X¹)₄₋ₚ (a)

      R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
   Component (B): a trifunctional silane-based compound represented by the following general formula (b):

      R²Si(OR³)_{q}(X²)_{3-q} (b)

      wherein,
      R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3,
   Component (C): a trifunctional silane-based compound represented by the following general formula (c):

      R⁴Si(OR⁵)ᵣ(X³)₃₋ᵣ (c)

      wherein,
      R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3,
   Component (D): a metal catalyst,
   Condition (I): a ratio of a molar amount of the component (A) to a molar amount of the component (B) [(A)/(B)] (molar ratio) is 1.4 or more, and
   Condition (II): a ratio of a molar amount of the component (B) to a total molar amount of the component (B) and the component (C) [(B)/{(B) + (C)}] (molar ratio) is 0.020 or more, and
Step (2): a step of coating the antifouling composition on a substrate or a release material, followed by drying to form an antifouling layer.

Preferably, in the case of coating the antifouling composition of the present invention, the antifouling composition of the present invention is dissolved in an organic solvent and coated in a form of solution onto the substrate or release material by a known coating method.

Examples of the organic solvent include methanol, ethanol, propanol, butanol, isopropyl alcohol, methyl ethyl ketone, methyl isobutyl ketone, ethyl acetate, toluene, and the like.

Examples of the coating method include a spin coating method, a spray coating method, a bar coating method, a knife coating method, a roll knife coating method, a roll coating method, a blade coating method, a die coating method, a gravure coating method, and the like.

After forming the coating film, the drying temperature and drying time of the coating film are not particularly limited and may be suitably set.

According to the antifouling composition of the present invention, the curing reaction may be allowed to proceed even at a relatively low temperature as 130°C or lower, and in the case of using a substrate with low heat resistance, such as a vinyl chloride resin, etc., heat shrinkage of the substrate may be suppressed.

Accordingly, the drying temperature is preferably 10 to 130°C, more preferably 20 to 120°C, still more preferably 40 to 110°C, and yet still more preferably 50 to 95°C from the aforementioned viewpoints as well as the viewpoint of productivity.

In order to protect the surface of the antifouling layer at the time of storage, the release material may be further laminated on the formed antifouling layer.

Furthermore, by sticking a pressure sensitive adhesive layer formed on another release material onto the formed antifouling layer, a pressure sensitive adhesive layer-provided antifouling sheet may also be produced as in the antifouling sheet 1b of (b) of Fig. 1 or the antifouling sheet 2b of (b) of Fig. 2.

### Examples

### Examples 1 to 21 and Comparative Examples 1 to 5

### (1) Preparation of Antifouling Composition

The component (A), the component (B), and the component (C) of the kind and blending ratio (active component ratio, mol%) shown in each of Tables 1 and 2 were blended, and ethanol was added to dilute the blend, thereby obtaining a solution having an active component concentration of 1.8 M. The resulting solution was further blended with hydrochloric acid that is the component (E) in a blending ratio (active component ratio, mol%) shown in each of Tables 1 and 2 and stirred for one minute. After stirring, the resultant was allowed to stand for 15 minutes.

Subsequently, titanium diisopropoxy bis(ethylacetoacetate) that is the component (D) in a blending ratio (active component ratio, mol%) shown in each of Tables 1 and 2 was blended to prepare a solution of an antifouling composition. (2) Production of Antifouling Sheet

A polyethylene terephthalate (PET) film having a primer layer provided on one surface thereof (trade name "COSMOSHINE A-4100" having a thickness of 50 µm, manufactured by Toyobo Co., Ltd.) was used as a substrate.

On the primer layer of the foregoing primer layer-provided substrate, the above-prepared solution of antifouling composition was applied using a Mayer bar, thereby forming a coating film.

Subsequently, the coating film was dried at 80°C for 2 minutes, thereby producing an antifouling sheet having an antifouling layer having a thickness shown in Table 3.

In preparing the antifouling composition in each of the Examples and Comparative Examples, details of the respective components used as shown in each of Tables 1 and 2 are as follows.

### <Component (A): Tetrafunctional Silane-based Compound represented by General Formula (a)>

- "TEOS": Tetraethoxysilane that is the tetrafunctional silane-based compound represented by the foregoing general formula (a) wherein p is 4, and R¹ is an ethyl group (carbon number: 2)

### <Component (B): Trifunctional Silane-based Compound represented by General Formula (b)>

- "Hexyltrimethoxysilane": Trifunctional silane-based compound represented by the foregoing general formula (b) wherein q is 3, R² is a n-hexyl group (carbon number: 6), and R³ is a methyl group (carbon number: 1)
- "Decyltrimethoxysilane": Trifunctional silane-based compound represented by the foregoing general formula (b) wherein q is 3, R² is a n-decyl group (carbon number: 10), and R³ is a methyl group (carbon number: 1)
- "Dodecyltrimethoxysilane": Trifunctional silane-based compound represented by the foregoing general formula (b) wherein q is 3, R² is a n-dodecyl group (carbon number: 12), and R³ is a methyl group (carbon number: 1)
- "Hexadecyltrimethoxysilane": Trifunctional silane-based compound represented by the foregoing general formula (b) wherein q is 3, R² is a n-hexadecyl group (carbon number: 16), and R³ is a methyl group (carbon number: 1)
- "Octadecyltrimethoxysilane": Trifunctional silane-based compound represented by the foregoing general formula (b) wherein q is 3, R² is a n-octadecyl group (carbon number: 18), and R³ is a methyl group (carbon number: 1)

### <Component (C): Trifunctional Silane-based Compound represented by General Formula (c)>

- "Methyltrimethoxysilane": Trifunctional silane-based compound represented by the foregoing formula (c) wherein r is 3, R⁴ is a methyl group (carbon number: 1), and R⁵ is a methyl group (carbon number: 1)
- "Ethyltrimethoxysilane": Trifunctional silane-based compound represented by the foregoing formula (c) wherein r is 3, R⁴ is an ethyl group (carbon number: 2), and R⁵ is a methyl group (carbon number: 1)
- "Propyltrimethoxysilane": Trifunctional silane-based compound represented by the foregoing formula (c) wherein r is 3, R⁴ is a n-propyl group (carbon number: 3), and R⁵ is a methyl group (carbon number: 1)

### <Component (D): Metal-based Catalyst>

- "Titanium-based catalyst": Titanium diisopropoxy bis(ethylacetoacetate) [trade name "ORGATIX TC-750", manufactured by Matsumoto Fine Chemical Co., Ltd.]

### <Component (E): Acid Catalyst>

- "Hydrochloric acid": 0.01M hydrochloric acid

The antifouling layer formed of the antifouling composition shown in each of Tables 1 and 2, as prepared in each of the Examples and Comparative Examples was evaluated for the properties thereof, according to the methods mentioned below. The results are shown in Table 3.

### <Thickness of Antifouling Layer>

The thickness of the antifouling layer was measured with a spectroscopic ellipsometer (trade name: "M-2000"), manufactured by J. A. Woollam Co., Inc.

### <Surface State of Antifouling Layer>

The surface of the antifouling layer of the antifouling sheet produced in each of the Examples and Comparative Examples was visually observed, and the surface state of the antifouling layer was evaluated according to the following criteria.
A: The surface of the antifouling layer was transparent.
B: The surface of the antifouling layer was confirmed to be slightly cloudy.
C: The surface of the antifouling layer was cloudy and not transparent.

The antifouling sheets given the evaluation of "C" regarding the surface state of antifouling layer were not on a usable level, and therefore, they were not evaluated except for the following curability of antifouling layer.

### <Curability of Antifouling Layer>

The surface of the antifouling layer of the antifouling sheet produced in each of the Examples and Comparative Examples was rubbed 20 times with a finger and then visually observed, and the curability of the antifouling layer was evaluated according to the following criteria.
A: There was seen no change in the color as compared with that before rubbing the antifouling layer with a finger.
B: The color was slightly changed white, but the change was on a tolerable level.
C: The color was changed white.
D: The coating film formed of the antifouling composition was not cured, so that an antifouling layer could not be formed.

The antifouling sheets given the evaluation of "C" or "D" regarding the curability of the antifouling layer were not on a usable level, and therefore, they were not evaluated in the following respective points.

### <Water Contact Angle of Antifouling Layer>

With respect to the surface of the antifouling layer of the antifouling sheet produced in each of the Examples and Comparative Examples, the water contact angle of the antifouling layer was measured with an automatic contact angle meter, manufactured by Kyowa Interface Science Co., Ltd. (trade name: "DM-701") in terms of a contact angle against 2 µL of water.

### <Water Slip Angle of Antifouling Layer>

The antifouling sheet produced in each of the Examples and Comparative Examples was, while stretched in wet, put on a sample table (glass plate) at a tilt angle of 0°. Subsequently, 14 µL of pure water was dropped on the surface of the antifouling layer of the aforementioned antifouling sheet to form a droplet. Thereafter, on the occasion of inclining the sample table, the tilt angle when a receding angle of the droplet moved was defined as the water slip angle.

### <Surface Hardness of Antifouling Layer>

Using a nano indenter, manufactured by MTS Corporation (trade name: "Nano Indenter SA2"), a hardness modulus in a depth of 45 nm from the surface layer (toward the substrate in the vertical direction) of the antifouling layer of the antifouling sheet produced in each of the Examples and Comparative Examples was measured.

A value of the foregoing hardness modulus was defined as the surface hardness.

### <Coefficient of Friction of Antifouling Layer>

The test was performed using a universal testing instrument tensilon, manufactured by A&D Company, Limited in conformity with JIS K7312. A sample produced from the antifouling sheet produced in each of the Examples and Comparative Examples was stuck to a weight of a smooth metal plate (200 g) of a regular square having a side of 63.5 mm and measured with respect to a coefficient of static friction and a coefficient of dynamic friction against a polyethylene terephthalate film, manufactured by Toray Industries, Inc. (trade name: "LUMIRROR T-60", thickness: 50 µm).

**Table 1**

| | Composition of antifouling composition | | | | | | | | | | | | | |
|---|---|---|---|---|---|---|---|---|---|---|---|---|---|---|
| | Component (A) | | Component (B) | | | Component (C) | | | Ratio of component (A), component (B), or component (C) [molar ratio] | | | | Component (D) | Component (E) |
| | Kind | Blending ratio [mol%] *1 | Kind | Carbon number of R² in formula (b) | Blending ratio [mol%] *1 | Kind | Carbon number of R⁴ in formula (c) | Blending ratio [mol%] *1 | Condition (I): (A)/(B) | Condition (II): (B)/ {(B) + (C)} | (A)/(C) | (A)/ {(B) + (C)} | Blending ratio [mol%] *1 | Blending ratio [mol%] *1 |
| Example 1 | TEOS | 80.0 | Decyltrimethoxysilane | 10 | 15.00 | Methyltrimethoxysilane | 1 | 5.00 | 5.3 | 0.750 | 16.0 | 4.00 | 2.000 | 0.067 |
| Example 2 | TEOS | 80.0 | Hexyltrimethoxysilane | 6 | 15.00 | Methyltrimethoxysilane | 1 | 5.00 | 5.3 | 0.750 | 16.0 | 4.00 | 2.000 | 0.067 |
| Example 3 | TEOS | 80.0 | Dodecyltrimethoxysilane | 12 | 15.00 | Methyltrimethoxysilane | 1 | 5.00 | 5.3 | 0.750 | 16.0 | 4.00 | 2.000 | 0.067 |
| Example 4 | TEOS | 80.0 | Decyltrimethoxysilane | 10 | 15.00 | Ethyltrimethoxysilane | 2 | 5.00 | 5.3 | 0.750 | 16.0 | 4.00 | 2.000 | 0.067 |
| Example 5 | TEOS | 80.0 | Decyltrimethoxysilane | 10 | 15.00 | Propyltrimethoxysilane | 3 | 5.00 | 5.3 | 0.750 | 16.0 | 4.00 | 2.000 | 0.067 |
| Example 6 | TEOS | 80.0 | Decyltrimethoxysilane | 10 | 0.60 | Methyltrimethoxysilane | 1 | 19.40 | 133.3 | 0.030 | 4.1 | 4.00 | 2.000 | 0.067 |
| Example 7 | TEOS | 80.0 | Decyltrimethoxysilane | 10 | 1.00 | Methyltrimethoxysilane | 1 | 19.00 | 80.0 | 0.050 | 4.2 | 4.00 | 2.000 | 0.067 |
| Example 8 | TEOS | 80.0 | Decyltrimethoxysilane | 10 | 2.00 | Methyltrimethoxysilane | 1 | 18.00 | 40.0 | 0.100 | 4.4 | 4.00 | 2.000 | 0.067 |
| Example 9 | TEOS | 80.0 | Decyltrimethoxysilane | 10 | 3.00 | Methyltrimethoxysilane | 1 | 17.00 | 26.7 | 0.150 | 4.7 | 4.00 | 2.000 | 0.067 |
| Example 10 | TEOS | 94.1 | Decyltrimethoxysilane | 10 | 4.41 | Methyltrimethoxysilane | 1 | 1.47 | 21.3 | 0.750 | 64.0 | 16.00 | 2.000 | 0.067 |
| Example 11 | TEOS | 80.0 | Decyltrimethoxysilane | 10 | 4.00 | Methyltrimethoxysilane | 1 | 16.00 | 20.0 | 0.200 | 5.0 | 4.00 | 2.000 | 0.067 |
| Example 12 | TEOS | 80.0 | Decyltrimethoxysliane | 10 | 5.00 | Methyltrimethoxysilane | 1 | 15.00 | 16.0 | 0.250 | 5.3 | 4.00 | 2.000 | 0.067 |
| Example 13 | TEOS | 88.9 | Decyltrimethoxysilane | 10 | 8.33 | Methyltrimethoxysilane | 1 | 2.78 | 10.7 | 0.750 | 32.0 | 8.00 | 2.000 | 0.067 |
| Example 14 | TEOS | 80.0 | Decyltrimethoxysilane | 10 | 10.00 | Methyltrimethoxysilane | 1 | 10.00 | 8.0 | 0.500 | 8.0 | 4.00 | 2.000 | 0.067 |
| Example 15 | TEOS | 60.0 | Decyltrimethoxysilane | 10 | 10.00 | Methyltrimethoxysilane | 1 | 30.00 | 6.0 | 0.250 | 2.0 | 1.50 | 2.000 | 0.067 |
| Example 16 | TEOS | 50.0 | Decyltrimethoxysilane | 10 | 12.50 | Methyltrimethoxysilane | 1 | 37.50 | 4.0 | 0.250 | 1.3 | 1.00 | 2.000 | 0.067 |
| Example 17 | TEOS | 60.0 | Decyltrimethoxysilane | 10 | 20.00 | Methyltrimethoxysilane | 1 | 20.00 | 3.0 | 0.500 | 3.0 | 1.50 | 2.000 | 0.067 |
| Example 18 | TEOS | 66.7 | Decyltrimethoxysilane | 10 | 25.00 | Methyltrimethoxysilane | 1 | 8.33 | 2.7 | 0.750 | 8.0 | 2.00 | 2.000 | 0.067 |
| Example 19 | TEOS | 66.7 | Decyltrimethoxysilane | 10 | 30.00 | Methyltrimethoxysilane | 1 | 3.33 | 2.2 | 0.900 | 20.0 | 2.00 | 2.000 | 0.067 |
| Example 20 | TEOS | 60.0 | Decyltrimethoxysilane | 10 | 30.00 | Methyltrimethoxysilane | 1 | 10.00 | 2.0 | 0.750 | 6.0 | 1.50 | 2.000 | 0.067 |
| Example 21 | TEOS | 50.0 | Decyltrimethoxysilane | 10 | 25.00 | Methyltrimethoxysilane | 1 | 25.00 | 2.0 | 0.500 | 2.0 | 1.00 | 2.000 | 0.067 |

| | | | | | | | | | | | | | | |
|---|---|---|---|---|---|---|---|---|---|---|---|---|---|---|
| *1: Blending ratio based on 100 mol% of the components (A), (B), and (C) | | | | | | | | | | | | | | |

**Table 2**

| | Composition of antifouling composition | | | | | | | | | | | | | |
|---|---|---|---|---|---|---|---|---|---|---|---|---|---|---|
| | Component (A) Component (B) | | | | | Component (C) | | | Ratio of component (A), component (B), or component (C) [molar ratio] | | | | Component (D) | Component (E) |
| | Kind | Blending [mol%] *1 | Kind | Carbon number of formula (b) | Blending [mol%] *1 | Kind | Carbon number of R⁴ in formula (c) | Blending [mol%] *1 | Condition (I): (A)/(B) | Condition (II).(B)/ {{B) + (C)} | (A)/(C) | (A)/ {(B) + (C)} | Blending [mol%] *1 | Blending [mol%] *1 |
| Comparative Example 1 | TEOS | 80.0 | Hexadecyltrimethoxysilane *2 | 16 | 15.00 | Methyltrimethoxysilane | 1 | 5.00 | 5.3 | 0.750 | 16.0 | 4.00 | 2.000 | 0.067 |
| Comparative Example 2 | TEOS | 80.0 | Octadecyltrimethoxysilane *2 | 18 | 15.00 | Methyltrimethoxysilane | 1 | 5.00 | 5.3 | 0.750 | 16.0 | 4.00 | 2.000 | 0.067 |
| Comparative Example 3 | TEOS | 50.0 | Decyltrimethoxysilane | 10 | 37.50 | Methyltrimethoxysilane | 1 | 12.50 | 1.3 | 0.750 | 4.0 | 1.00 | 2.000 | 0.067 |
| Comparative Example 4 | TEOS | 80.0 | Decyltrimethoxysilane | 10 | 0.20 | Methyltrimethoxysilane | 1 | 19.80 | 400.0 | 0.010 | 4.0 | 4.00 | 2.000 | 0.067 |
| Comparative Example 5 | TEOS | 80.0 | Decyltrimethoxysilane | 10 | 0.02 | Methyltrimethoxysilane | 1 | 19.98 | 4000.0 | 0.001 | 4.0 | 4.00 | 2.000 | 0.067 |

| | | | | | | | | | | | | | | |
|---|---|---|---|---|---|---|---|---|---|---|---|---|---|---|
| *1: Blending ratio based on 100 mol% of the components (A), (B), and (C) *2: Trifunctional silane-based compound falling outside the scope of the component (B) | | | | | | | | | | | | | | |

**Table 3**

| | Evaluation results of antifouling sheet (antifouling layer) | | | | | | | |
|---|---|---|---|---|---|---|---|---|
| | Thickness of antifouling layer [µm] | Surface state of antifouling layer | Curability of antifouling layer | Water contact angle [°] | Water slip angle [°] | Surface hardness [GPa] | Coefficient of friction | |
| | | | | | | | Static friction | Dynamic friction |
| Example 1 | 0.55 | A | A | 109.2 | 7.8 | 3.7 | 0.13 | 0.13 |
| Example 2 | 0.42 | A | A | 100.2 | 9.5 | 3.9 | 0.20 | 0.17 |
| Example 3 | 0.54 | A | A | 109.9 | 5.8 | 3.0 | 0.13 | 0.12 |
| Example 4 | 0.52 | A | A | 107.7 | 7.8 | 3.1 | 0.16 | 0.15 |
| Example 5 | 0.53 | A | A | 106.2 | 9.1 | 3.2 | 0.15 | 0.14 |
| Example 6 | 0.37 | A | A | 83.5 | 23.3 | 5.9 | 0.29 | 0.31 |
| Example 7 | 0.40 | A | A | 98.5 | 7.4 | 5.6 | 0.18 | 0.17 |
| Example 8 | 0.39 | A | A | 102.0 | 6.8 | 5.5 | 0.15 | 0.15 |
| Example 9 | 0.37 | A | A | 104.2 | 6.2 | 4.9 | 0.15 | 0.15 |
| Example 10 | 0.40 | A | A | 104.7 | 4.9 | 6.7 | 0.21 | 0.25 |
| Example 11 | 0.34 | A | A | 101.8 | 8.4 | 5.1 | 0.16 | 0.15 |
| Example 12 | 0.45 | A | A | 107.1 | 9.6 | 5.2 | 0.13 | 0.14 |
| Example 13 | 0,47 | A | A | 103.9 | 6.6 | 5.1 | 0.15 | 0.18 |
| Example 14 | 0.50 | A | A | 107.9 | 12.2 | 4.3 | 0.14 | 0.15 |
| Example 15 | 0.42 | A | A | 98.6 | 7.7 | 3.3 | 0.18 | 0.16 |
| Example 16 | 0.55 | A | A | 99.0 | 8.3 | 2.6 | 0.21 | 0.20 |
| Example 17 | 0.56 | A | A | 105.5 | 10.7 | 1.6 | 0.18 | 0.18 |
| Example 18 | 0.68 | A | A | 107.0 | 7.3 | 2.3 | 0.18 | 0.21 |
| Example 19 | 0.69 | A | A | 108.2 | 10.2 | 1.1 | 0.15 | 0.15 |
| Example 20 | 0.67 | A | B | 105.4 | 14.4 | 0.9 | 0.18 | 0.20 |
| Example 21 | 0.71 | A | B | 102.9 | 8.7 | 1.4 | 0.22 | 0.20 |
| Comparative Example 1 | n.d. *3 | C | D | n.d. *3 | n.d. *3 | n.d. *3 | n.d. *3 | n.d. *3 |
| Comparative Example 2 | n.d. *3 | C | D | n.d. *3 | n.d. *3 | n.d. *3 | n.d. *3 | n.d. *3 |
| Comparative Example 3 | 0.82 | A | B | 102.9 | 20.1 | 0.7 | 0.25 | 0.27 |
| Comparative Example 4 | 0.38 | A | A | 67.4 | 23.6 | 5.5 | 0.36 | 0.35 |
| Comparative Example 5 | 0.38 | A | A | 55.6 | 27.7 | 5.7 | 0.35 | 0.37 |

| | | | | | | | | |
|---|---|---|---|---|---|---|---|---|
| *3: Not evaluated because in the antifouling layer, the surface state was "C", or the curability was "D". | | | | | | | | |

From Tables 1 and 3, the antifouling layer formed of the antifouling composition of each of Examples 1 to 19 was favorable in the surface state and the curability. Furthermore, the water contact angle is large, and the water slip angle is small, so that it was confirmed that the antifouling layer was also excellent in water repellency and water slipping properties. In addition, the surface hardness is high, and the coefficient of friction is low, so that the antifouling layer was favorable in all of these properties.

In addition, though in the antifouling layer formed of the antifouling composition of each of Examples 20 and 21, the curability is inferior to that in other Examples, the degree thereof was tolerable in practical use. The surface state of the antifouling layer was favorable. In addition, the water contact angle is large, and the water slip angle is small, so that it was confirmed that the antifouling layer was also excellent in water repellency and water slipping properties. In addition, the surface hardness was in a tolerable degree, and the coefficient of friction was low and favorable.

On the other hand, from Tables 2 and 3, in the antifouling layer formed of the antifouling composition of each of Comparative Examples 1 and 2, since the carbon number of the alkyl group represented by R² in the foregoing general formula (b) expressing the component (B) is more than 14, the results in which the surface state and the curability are inferior were revealed. Accordingly, it was judged that the antifouling sheet having such an antifouling layer does not withstand use, and evaluations other than those regarding the surface state and the curability are not performed.

In addition, since the antifouling layer formed of the antifouling composition of Comparative Example 3 does not satisfy the condition (I), the results in which the surface hardness is remarkably inferior were revealed. In addition, since the antifouling layer formed of the antifouling composition of each of Comparative Examples 4 and 5 does not satisfy the condition (II), the results in which the coefficient of friction is high, so that the friction properties are inferior were revealed.

### Industrial Applicability

The antifouling layer formed of the antifouling composition of the present invention is favorable in surface state and curability and favorable in water repellency and water slipping properties and also has a high surface hardness and a low coefficient of friction.

Accordingly, the antifouling sheet including the antifouling layer of the present invention is suitable, for example, as an antifouling sheet for preventing water droplets, scars, stains, and the like that may hinder vision, from adhering to the surfaces of windows for buildings, windows for automobiles, windshields for cars, airplanes, ships, and the like, aquariums, ship bottom windows, undersea lives adhesion preventing films for ship bottoms, road panels such as soundproof walls, mirrors installed in bathrooms or the like, and molded articles, such as glass chambers, and glass accessories. The antifouling sheet including the antifouling layer of the present invention is more suitable in the case of being used for an application to be used in the environment where water repellency and water slipping properties such that water droplets or accreted snow may be efficiently slipped off, as well as reduction of occurrence of a scar due to excellent surface hardness and friction properties are required for windows for automobiles, and windshields for cars, vehicles, airplanes, ships, etc.

### Reference Signs List

1a, 1b, 2a, 2b: Antifouling sheet
11: Antifouling layer
12: Substrate
13: Pressure sensitive adhesive layer
14, 14': Release material

## Claims

1. An antifouling composition comprising the following components (A) to (D) and satisfying the following conditions (I) and (II):
Component (A): a tetrafunctional silane-based compound represented by the following general formula (a):
Si(OR¹)ₚ(X¹)₄₋ₚ (a)
wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
Component (B): a trifunctional silane-based compound represented by the following general formula (b):
R²Si(OR³)_{q}(X²)_{3-q} (b)
wherein,
R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3,
Component (C): a trifunctional silane-based compound represented by the following general formula (c):
R⁴Si(OR⁵)ᵣ(X³)₃₋ᵣ (c)
wherein,
R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3,
Component (D): a metal catalyst,
Condition (I): a ratio of a molar amount of the component (A) to a molar amount of the component (B) [(A)/(B)] (molar ratio) is 1.4 or more, and
Condition (II): a ratio of a molar amount of the component (B) to a total molar amount of the component (B) and the component (C) [(B)/{(B) + (C)}] (molar ratio) is 0.020 or more.

2. The antifouling composition according to claim 1, wherein the content of the component (D) is 0.010 mol% or more and 50.000 mol% or less based on 100 mol% of a sum total of the component (A), the component (B), and the component (C).

3. The antifouling composition according to claim 1 or 2, wherein the component (D) is a metal catalyst which does not require light irradiation for revealing a catalytic action.

4. The antifouling composition according to any one of claims 1 to 3, wherein the component (D) is at least one selected from the group consisting of a titanium-based catalyst, a zirconium-based catalyst, a palladium-based catalyst, a tin-based catalyst, an aluminum-based catalyst, and a zinc-based catalyst.

5. The antifouling composition according to any one of claims 1 to 4, further comprising an acid catalyst that is a component (E), the content of the component (E) being 0.010 mol% or more and 1.000 mol% or less based on 100 mol% of a sum total of the component (A), the component (B), and the component (C).

6. The antifouling composition according to claim 5, wherein the component (E) is at least one selected from the group consisting of hydrochloric acid, phosphoric acid, acetic acid, formic acid, sulfuric acid, methanesulfonic acid, oxalic acid, p-toluenesulfonic acid, and trifluoroacetic acid.

7. The antifouling composition according to claim 5 or 6, wherein a total content of the component (A), the component (B), the component (C), the component (D), and the component (E) in the antifouling composition is 50% by mass or more and 100% by mass or less based on 100% by mass of the total amount of the antifouling composition.

8. An antifouling sheet comprising an antifouling layer formed of the antifouling composition according to any one of claims 1 to 7.

9. The antifouling sheet according to claim 8, wherein the antifouling layer is included on a substrate.

10. The antifouling sheet according to claim 8, having a configuration in which the antifouling layer is sandwiched between two release materials.

11. The antifouling sheet according to any one of claims 8 to 10, further comprising a pressure sensitive adhesive layer.

12. The antifouling sheet according to any one of claims 8 to 11, wherein the thickness of the antifouling layer is 40 µm or less.

13. A method for producing an antifouling sheet, comprising the following steps (1) and (2):
Step (1): a step of preparing an antifouling composition comprising the following components (A) to (D) and satisfying the following conditions (I) and (II):
Component (A): a tetrafunctional silane-based compound represented by the following general formula (a):
Si(OR¹)ₚ(X¹)₄₋ₚ (a)
wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
Component (B): a trifunctional silane-based compound represented by the following general formula (b):
R²Si(OR³)_{q}(X²)_{3-q} (b)
wherein,
R² represents an alkyl group having 6 to 14 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3,
Component (C): a trifunctional silane-based compound represented by the following general formula (c):
R⁴Si(OR⁵)ᵣ(X³)₃₋ᵣ (c)
wherein,
R⁴ represents an alkyl group having 1 to 3 carbon atoms; R⁵ represents an alkyl group having 1 to 6 carbon atoms; X³ represents a halogen atom; when plural R⁵s and X³s are present, the plural R⁵s and X³s may be the same as or different from each other; and r represents an integer of 0 to 3,
Component (D): a metal catalyst,
Condition (I): a ratio of a molar amount of the component (A) to a molar amount of the component (B) [(A)/(B)] (molar ratio) is 1.4 or more, and
Condition (II): a ratio of a molar amount of the component (B) to a total molar amount of the component (B) and the component (C) [(B)/{(B) + (C)}] (molar ratio) is 0.020 or more, and
Step (2): a step of coating the antifouling composition on a substrate or a release material, followed by drying to form an antifouling layer.

14. An antifouling sheet obtained by the production method according to claim 13.

## Patentansprüche

1. Antifouling-Zusammensetzung, die die folgenden Komponenten (A) bis (D) umfasst und die folgenden Bedingungen (I) und (II) erfüllt:
Komponente (A): eine tetrafunktionelle Verbindung auf Silanbasis, dargestellt durch die folgende allgemeine Formel (a):
Si(OR¹)ₚ(X¹)₄₋ₚ (a)
wobei
R¹ eine Alkylgruppe darstellt, die 1 bis 6 Kohlenstoffatome aufweist; X¹ ein Halogenatom darstellt; wenn mehrere R¹s und X¹s vorhanden sind, die mehreren R¹s und X¹s gleich oder unterschiedlich voneinander sein können; und p eine ganze Zahl von 0 bis 4 darstellt,
Komponente (B): eine trifunktionelle Verbindung auf Silanbasis, dargestellt durch die folgende allgemeine Formel (b):
R²Si(OR³)_{q}(X²)_{3-q} (b)
wobei
R² eine Alkylgruppe darstellt, die 6 bis 14 Kohlenstoffatome aufweist; R³ eine Alkylgruppe darstellt, die 1 bis 6 Kohlenstoffatome aufweist; X² ein Halogenatom darstellt; wenn mehrere R³s und X²s vorhanden sind, die mehreren R³s und X²s gleich oder unterschiedlich voneinander sein können; und q eine ganze Zahl von 0 bis 3 darstellt,
Komponente (C): eine trifunktionelle Verbindung auf Silanbasis, dargestellt durch die folgende allgemeine Formel (c):
R⁴Si(OR)ᵣ(X³)₃₋ᵣ (c)
wobei
R⁴ eine Alkylgruppe darstellt, die 1 bis 3 Kohlenstoffatome aufweist; R⁵ eine Alkylgruppe darstellt, die 1 bis 6 Kohlenstoffatome aufweist; X³ ein Halogenatom darstellt; wenn mehrere R⁵s und X³s vorhanden sind, die mehreren R⁵s und X³s gleich oder unterschiedlich voneinander sein können; und r eine ganze Zahl von 0 bis 3 darstellt,
Komponente (D): ein Metallkatalysator,
Bedingung (I): ein Verhältnis einer molaren Menge der Komponente (A) zu einer molaren Menge der Komponente (B) [(A)/(B)] (Molverhältnis) beträgt 1,4 oder mehr, und
Bedingung (II): ein Verhältnis einer molaren Menge der Komponente (B) zu einer gesamten molaren Menge der Komponente (B) und der Komponente (C) [(B)/{(B) + (C)}] (Molverhältnis) beträgt 0,020 oder mehr.

2. Antifouling-Zusammensetzung nach Anspruch 1, wobei der Gehalt der Komponente (D) 0,010 Mol-% oder mehr und 50,000 Mol-% oder weniger, basierend auf 100 Mol-% der Gesamtsumme der Komponente (A), der Komponente (B) und der Komponente (C), beträgt.

3. Antifouling-Zusammensetzung nach Anspruch 1 oder 2, wobei die Komponente (D) ein Metallkatalysator ist, der keine Lichtbestrahlung erfordert, um eine katalytische Wirkung zu entfalten.

4. Antifouling-Zusammensetzung nach einem der Ansprüche 1 bis 3, wobei die Komponente (D) mindestens eine ist, die aus der Gruppe ausgewählt ist bestehend aus einem Katalysator auf Titanbasis, einem Katalysator auf Zirkoniumbasis, einem Katalysator auf Palladiumbasis, einem Katalysator auf Zinnbasis, einem Katalysator auf Aluminiumbasis und einem Katalysator auf Zinkbasis.

5. Antifouling-Zusammensetzung nach einem der Ansprüche 1 bis 4, weiter umfassend einen Säurekatalysator, der eine Komponente (E) ist, wobei der Gehalt der Komponente (E) 0,010 Mol-% oder mehr und 1,000 Mol-% oder weniger, basierend auf 100 Mol-% der Gesamtsumme der Komponente (A), der Komponente (B) und der Komponente (C), beträgt.

6. Antifouling-Zusammensetzung nach Anspruch 5, wobei die Komponente (E) mindestens eine ist, ausgewählt aus der Gruppe bestehend aus Salzsäure, Phosphorsäure, Essigsäure, Ameisensäure, Schwefelsäure, Methansulfonsäure, Oxalsäure, p-Toluolsulfonsäure und Trifluoressigsäure.

7. Antifouling-Zusammensetzung nach Anspruch 5 oder 6, wobei der Gesamtgehalt der Komponente (A), der Komponente (B), der Komponente (C), der Komponente (D) und der Komponente (E) in der Antifouling-Zusammensetzung 50 Massen-% oder mehr und 100 Massen-% oder weniger, basierend auf 100 Massen-% der Gesamtmenge der Antifouling-Zusammensetzung, beträgt.

8. Antifouling-Folie, umfassend eine Antifouling-Schicht, die aus der Antifouling-Zusammensetzung nach einem der Ansprüche 1 bis 7 gebildet ist.

9. Antifouling-Folie nach Anspruch 8, wobei die Antifouling-Schicht auf einem Substrat eingeschlossen ist.

10. Antifouling-Folie nach Anspruch 8, die eine Konfiguration aufweist, bei der die Antifouling-Schicht sandwichartig zwischen zwei Trennmaterialien eingeschoben ist.

11. Antifouling-Folie nach einem der Ansprüche 8 bis 10, weiter umfassend eine druckempfindliche Haftschicht

12. Antifouling-Folie nach einem der Ansprüche 8 bis 11, wobei die Dicke der Antifouling-Schicht 40 µm oder weniger beträgt.

13. Verfahren zur Herstellung einer Antifouling-Folie, umfassend die folgenden Schritte (1) und (2):
Schritt (1): einen Schritt der Vorbereitung einer Antifouling-Zusammensetzung, die die folgenden Komponenten (A) bis (D) umfasst und die folgenden Bedingungen (I) und (II) erfüllt:
Komponente (A): eine tetrafunktionelle Verbindung auf Silanbasis, dargestellt durch die folgende allgemeine Formel (a):
Si(OR¹)ₚ(X¹)₄₋ₚ (a)
wobei
R¹ eine Alkylgruppe darstellt, die 1 bis 6 Kohlenstoffatome aufweist; X¹ ein Halogenatom darstellt; wenn mehrere R¹s und X¹s vorhanden sind, die mehreren R¹s und X¹s gleich oder unterschiedlich voneinander sein können; und p eine ganze Zahl von 0 bis 4 darstellt,
Komponente (B): eine trifunktionelle Verbindung auf Silanbasis, dargestellt durch die folgende allgemeine Formel (ab):
R²Si(OR³)_{q}(X²)_{3-q} (b)
wobei
R² eine Alkylgruppe darstellt, die 6 bis 14 Kohlenstoffatome aufweist; R³ eine Alkylgruppe darstellt, die 1 bis 6 Kohlenstoffatome aufweist; X² ein Halogenatom darstellt; wenn mehrere R³s und X²s vorhanden sind, die mehreren R³s und X²s gleich oder unterschiedlich voneinander sein können; und q eine ganze Zahl von 0 bis 3 darstellt,
Komponente (C): eine trifunktionelle Verbindung auf Silanbasis, dargestellt durch die folgende allgemeine Formel (c):
R⁴Si(OR⁵)ᵣ(X³)₃₋ᵣ (c)
wobei
R⁴ eine Alkylgruppe darstellt, die 1 bis 3 Kohlenstoffatome aufweist; R⁵ eine Alkylgruppe darstellt, die 1 bis 6 Kohlenstoffatome aufweist; X³ ein Halogenatom darstellt; wenn mehrere R⁵s und X³s vorhanden sind, die mehreren R⁵s und X³s gleich oder unterschiedlich voneinander sein können; und r eine ganze Zahl von 0 bis 3 darstellt,
Komponente (D): ein Metallkatalysator,
Bedingung (I): ein Verhältnis einer molaren Menge der Komponente (A) zu einer molaren Menge der Komponente (B) [(A)/(B)] (Molverhältnis) beträgt 1,4 oder mehr, und
Bedingung (II): ein Verhältnis einer molaren Menge der Komponente (B) zu einer gesamten molaren Menge der Komponente (B) und der Komponente (C) [(B)/{(B) + (C)}] (Molverhältnis) beträgt 0,020 oder mehr, und
Schritt (2): einen Schritt des Beschichtens eines Substrats oder eines Trennmaterials mit der Antifouling-Zusammensetzung, gefolgt von Trocknen zur Bildung einer Antifouling-Schicht.

14. Antifouling-Folie, die durch das Herstellungsverfahren nach Anspruch 13 gewonnen wird.

## Revendications

1. Composition antisalissure comprenant les composants (A) à (D) suivants et satisfaisant aux conditions (I) et (II) suivantes :
Composant (A) : un composé à base de silane tétrafonctionnel représenté par la formule générale (a) suivante :
Si(OR¹)ₚ(X¹)₄₋ₚ (a)
dans laquelle,
R¹ représente un groupement alkyle présentant de 1 à 6 atomes de carbone ; X¹ représente un atome d'halogène ; lorsque plusieurs R¹ et X¹ sont présents, les plusieurs R¹ et X¹ peuvent être identiques ou différents les uns des autres ; et p représente un nombre entier compris entre 0 et 4,
Composant (B) : un composé à base de silane trifonctionnel représenté par la formule générale (b) suivante :
R²Si(OR³)_{q}(X²)_{3-q} (b)
dans laquelle,
R² représente un groupement alkyle présentant de 6 à 14 atomes de carbone ; R³ représente un groupement alkyle présentant de 1 à 6 atomes de carbone ; X² représente un atome d'halogène; lorsque plusieurs R³ et X² sont présents, les plusieurs R³ et X² peuvent être identiques ou différents les uns des autres; et q représente un nombre entier compris entre 0 et 3,
Composant (C): un composé à base de silane trifonctionnel représenté par la formule générale (c) suivante :
R⁴Si(OR⁵)ᵣ(X³)₃₋ᵣ (c)
dans laquelle,
R⁴ représente un groupement alkyle présentant de 1 à 3 atomes de carbone ; R⁵ représente un groupement alkyle présentant de 1 à 6 atomes de carbone ; X³ représente un atome d'halogène ; lorsque plusieurs R⁵ et X³ sont présents, les plusieurs R⁵ et X³ peuvent être identiques ou différents les uns des autres ; et r représente un nombre entier compris entre 0 et 3,
Composant (D) : un catalyseur métallique,
Condition (I) : un rapport entre une quantité molaire du composant (A) et une quantité molaire du composant (B) [(A)/(B)] (rapport molaire) est de 1,4 ou plus, et
Condition (II) : un rapport entre une quantité molaire du composant (B) et une quantité molaire totale du composant (B) et du composant (C) [(B)/{(B) + (C)}] (rapport molaire) est de 0,020 ou plus.

2. Composition antisalissure selon la revendication 1, dans laquelle la teneur en composant (D) est de 0,010 % en mole ou plus et de 50,000 % en mole ou moins sur la base de 100 % en mole d'une somme totale du composant (A), du composant (B) et du composant (C).

3. Composition antisalissure selon la revendication 1 ou 2, dans laquelle le composant (D) est un catalyseur métallique qui ne nécessite pas une irradiation de lumière pour révéler une action catalytique.

4. Composition antisalissure selon l'une quelconque des revendications 1 à 3, dans laquelle le composant (D) est au moins un sélectionné à partir du groupe constitué par un catalyseur à base de titane, un catalyseur à base de zirconium, un catalyseur à base de palladium, un catalyseur à base d'étain, un catalyseur à base d'aluminium et un catalyseur à base de zinc.

5. Composition antisalissure selon l'une quelconque des revendications 1 à 4, comprenant en outre un catalyseur acide qui est un composant (E), la teneur en composant (E) étant de 0,010 % en mole ou plus et de 1,000 % en mole ou moins sur la base de 100 % en mole d'une somme totale du composant (A), du composant (B) et du composant (C).

6. Composition antisalissure selon la revendication 5, dans laquelle le composant (E) est au moins un sélectionné à partir du groupe constitué par l'acide chlorhydrique, l'acide phosphorique, l'acide acétique, l'acide formique, l'acide sulfurique, l'acide méthanesulfonique, l'acide oxalique, l'acide p-toluènesulfonique, et l'acide trifluoroacétique.

7. Composition antisalissure selon la revendication 5 ou 6, dans laquelle une teneur totale en composant (A), en composant (B), en composant (C), en composant (D) et en composant (E) dans la composition antisalissure est de 50 % en masse ou plus et de 100 % en masse ou moins sur la base de 100 % en masse de la quantité totale de la composition antisalissure.

8. Feuille antisalissure comprenant une couche antisalissure formée de la composition antisalissure selon l'une quelconque des revendications 1 à 7.

9. Feuille antisalissure selon la revendication 8, dans laquelle la couche antisalissure est incluse sur un substrat.

10. Feuille antisalissure selon la revendication 8, présentant une configuration dans laquelle la couche antisalissure est prise en sandwich entre deux matériaux de séparation.

11. Feuille antisalissure selon l'une quelconque des revendications 8 à 10, comprenant en outre une couche adhésive sensible à la pression.

12. Feuille antisalissure selon l'une quelconque des revendications 8 à 11, dans laquelle l'épaisseur de la couche antisalissure est de 40 µm ou moins.

13. Procédé de production d'une feuille antisalissure, comprenant les étapes (1) et (2) suivantes :
Étape (1): une étape consistant à préparer une composition antisalissure comprenant les composants (A) à (D) suivants et satisfaisant aux conditions (I) et (II) suivantes :
Composant (A) : un composé à base de silane tétrafonctionnel représenté par la formule générale (a) suivante :
Si(OR¹)ₚ(X¹)₄₋ₚ (a)
dans laquelle,
R¹ représente un groupement alkyle présentant de 1 à 6 atomes de carbone ; X¹ représente un atome d'halogène ; lorsque plusieurs R¹ et X¹ sont présents, les plusieurs R¹ et X¹ peuvent être identiques ou différents les uns des autres ; et p représente un nombre entier compris entre 0 et 4,
Composant (B) : un composé à base de silane trifonctionnel représenté par la formule générale (b) suivante :
R²Si(OR³)_{q}(X²)_{3-q} (b)
dans laquelle,
R² représente un groupement alkyle présentant de 6 à 14 atomes de carbone ; R³ représente un groupement alkyle présentant de 1 à 6 atomes de carbone ; X² représente un atome d'halogène ; lorsque plusieurs R³ et X² sont présents, les plusieurs R³ et X² peuvent être identiques ou différents les uns des autres; et q représente un nombre entier compris entre 0 et 3,
Composant (C) : un composé à base de silane trifonctionnel représenté par la formule générale (c) suivante :
R⁴Si(OR⁵)ᵣ(X³)₃₋ᵣ (c)
dans laquelle,
R⁴ représente un groupement alkyle présentant de 1 à 3 atomes de carbone ; R⁵ représente un groupement alkyle présentant de 1 à 6 atomes de carbone ; X³ représente un atome d'halogène ; lorsque plusieurs R⁵ et X³ sont présents, les plusieurs R⁵ et X³ peuvent être identiques ou différents les uns des autres ; et r représente un nombre entier compris entre 0 et 3,
Composant (D) : un catalyseur métallique,
Condition (I) : un rapport entre une quantité molaire du composant (A) et une quantité molaire du composant (B) [(A)/(B)] (rapport molaire) est de 1,4 ou plus, et
Condition (II) : un rapport entre une quantité molaire du composant (B) et une quantité molaire totale du composant (B) et du composant (C) [(B)/{(B) + (C)}] (rapport molaire) est de 0,020 ou plus, et
Étape (2) : une étape consistant à revêtir la composition antisalissure sur un substrat ou un matériau de séparation, suivi par un séchage pour former une couche antisalissure.

14. Feuille antisalissure obtenue par le procédé de production selon la revendication 13.
